# FASCICULE DE BREVET EUROPEEN

(11) **EP 2 301 357 B1**
(45) Date de publication et mention de la délivrance du brevet: **02.11.2016**
(21) Numéro de dépôt: 10167393.7
(22) Date de dépôt: 25.06.2010
(51) Int. Cl.: A01N 65/08, A01N 65/16, A01N 25/08, A01N 25/18, A01P 7/02

(54) **COMPOSITION BIOLOGIQUE CONTRE VARROA**
BIOLOGISCHE ZUSAMMENSETZUNG GEGEN VARROOSE
BIOLOGICAL COMPOSITION AGAINST VARROA

(30) Priorité: 31.08.2009 FR 0904146
(43) Date de publication de la demande: 30.03.2011
(73) Titulaire: Grosmond, Gilles. M, 63290 Limons (FR)
(72) Inventeur: Grosmond, Gilles. M, 63290 Limons (FR)
(74) Mandataire: Lavoix

(56) Documents cités:
- WO-A1-97/47193
- US-A- 4 965 287
- DATABASE WPI Week 200149 Thomson Scientific, London, GB; AN 2001-453799 XP002683572, & JP 2001 106609 A (NIPPON EISEI CENT KK) 17 avril 2001 (2001-04-17)
- DATABASE WPI Week 199224 Thomson Scientific, London, GB; AN 1992-198066 XP002683573, & SU 1 676 554 A1 (BEE KEEPING RES INST) 15 septembre 1991 (1991-09-15)
- MARÃA LAURA UMPIÃ CR RREZ ET AL: "Plant essential oils as potential control agents of varroatosis", PHYTOCHEMISTRY REVIEWS, KLUWER ACADEMIC PUBLISHERS, DO, vol. 10, no. 2, 22 mai 2010 (2010-05-22), pages 227-244, XP019910868, ISSN: 1572-980X, DOI: 10.1007/S11101-010-9182-0

## Description

La présente invention concerne un procédé de lutte contre le Varroa, parasite externe des abeilles, notamment contre Varroa destructor (jacobsoni) parasite externe de l'abeille Apis mellifera.
Le Varroa, de la famille des Varoidae, est un acarien parasite des abeilles. Il est notamment responsable de l'effondrement des colonies d'abeilles. Le cycle de reproduction du Varroa se déroule exclusivement dans le couvain. Comme tout parasite le Varroa va vivre au dépend de son hôte générant ainsi la mort de ce dernier et à termes celui de la colonie. La prolifération peut être relativement rapide et une ruche peut se voir rapidement dépeuplée. De nombreuses méthodes permettant de lutter contre ce parasite ont déjà été mises en oeuvre.

La majorité des compositions de l'art antérieur comprennent des substances à activité acaricide telles que des organophosphorés, des acides organiques, des analogues structuraux de certaines huiles essentielles dont le thymol, et le linalol.
Cependant toutes les solutions utilisées jusqu'alors présentent à des degrés divers, des effets indésirables : résidus dans les cires et produits de la ruche, résistance du parasite à ces molécules, effets secondaires vis-à-vis des abeilles.

Des moyens de lutte biologique destinés à éviter les effets indésirables sont aujourd'hui proposés :
- usage de substances à effet kairomone destinées au piégeage des varroas, ces substances ont un intérêt uniquement diagnostic et donc de mise en évidence de la présence ou non de varroa mais ne permettent pas de lutter contre varroa ;
- usage de bacilles ou de virus capables d'affaiblir les parasites de l'abeille, l'activité de ces virus n'est encore qu'hypothétique ;
- compléments alimentaires susceptibles de stimuler les moyens de défense de l'abeille, ces compléments ne permettent pas une lutte directe et efficace contre varroa.

On connaît également de WO91/07875 une composition permettant de tuer les varroas et contenant un ou plusieurs terpènes cycliques ou acycliques, de préférence le linalol, l'acétate de linalyl, l'eugénol et/ou l'anéthole ou des huiles volatiles de plantes. Ces compositions sont préparées sous des formes compatibles avec l'évaporation, la vaporisation ou la fumigation.

On connaît également de US2009/0060880 une composition biopesticide contre varroa comprenant une moisissure de type Beauveria bassiana.
On connaît enfin de DE102006054975 une composition pour lutter contre varroa consistant en une émulsion aqueuse d'huile végétale.
On connaît également de WO 97/47193, une composition comprenant un support poreux de type gel imprégné d'une huile essentielle, utilisée pour contrôler les infections causées par le varroa entre autres dans les ruches. La durée de diffusion de cette composition est comprise entre 4 et 6 semaines.
Cependant, les compositions citées dans ces spécialités présentent l'inconvénient de ne pas permettre une action prolongée dans le temps. De plus, les produits de synthèse tels que le thymol, le linalol et l'eugénol ont un effet négatif sur la santé des abeilles. Il a ainsi été démontré qu'une abeille exposée pendant plusieurs semaines à des vapeurs de Thymol est neuf fois plus sensible aux pesticides que les abeilles non exposées.

L'invention décrit une composition biologique de lutte contre les varroas qui présente une activité élevée et qui ne soit pas préjudiciable aux abeilles et aux produits issus de la ruche (notamment cire, miel...).

L'invention décrit une composition biologique de lutte contre les varroas qui présente également une action bénéfique sur les abeilles.

L'objectif de la présente invention est de fournir un nouveau procédé de lutte contre Varroa.

Le parasite Varroa destructor repère les larves du couvain qu'il va parasiter avant leur operculation essentiellement à l'aide des odeurs qu'elles émettent (Comment les varroas détectent les larves d'abeilles, Yves LeConte, Gerard Arnold, La santé de l'abeille, N°112, 1989; Odorat et goût: « les yeux du varroa », Mattias Rickli, Thèse Revue Suisse d'apiculture, N°5 (1995) et N°6 (1995)). La présente invention est basée sur la diffusion dans la ruche d'une odeur très prégnante qui crée pour le parasite une forte difficulté à repérer les alvéoles où il doit pénétrer. Cette gêne aboutit à une stagnation, voire à une forte régression, des effectifs de parasites surtout pendant la période de fort développement des colonies.

Il est donc important de pouvoir fournir une composition ayant une odeur très prégnante et qui puisse libérer cette odeur sur une longue durée de temps.

La demanderesse a mis au point une composition biologique de lutte contre le varroa. Cette composition est caractérisée en ce qu'elle comprend un support poreux ou microporeux et une huile essentielle ou un mélange d'huiles essentielles imprégnant ledit support.

L'invention concerne un procédé de lutte contre varroa, par confusion olfactive utilisant au moins une composition comprenant un support poreux ou microporeux et une huile essentielle ou un mélange d'huiles essentielles imprégnant ledit support, qui comprend les étapes de :
- mise en place de la composition dans la ruche,
- diffusion d'une quantité d'huiles essentielles de la composition comprise entre 50 et 500 mg/jour et par ruche pendant une durée comprise entre 4 mois et 1 an.
Les supports poreux, notamment microporeux, jouent le rôle de support de diffusion et par conséquent doivent être les plus neutres possibles vis-à-vis des substances diffusées et vis-à-vis du milieu intérieur de la ruche.

Dans un mode de réalisation le support, notamment support microporeux, est choisi parmi les bois légers peu lignifiés tels que par exemple le Peuplier, le Saule, le Tilleul, le Balsa; le liège ; les charbons de bois issus d'arbres non résineux ; les terres cuites ou tout support de même nature ; les argiles notamment de type smectites, illites, zéolithes, sépiolites; les algues cavitaires notamment de type lithothamne ou diatomées ; les roches volcaniques telles que par exemple la pouzzolane, la pierre ponce et l'andésite ; les polysacchrides tels que par exemple le xanthane, les extraits d'algues tels que l'acide hyaluronique et l'agaragar, les extraits de carapace de crustacés tels que le chitosan ; les pectines végétales et les dérivés de cellulose ou d'amidon notamment présentés en blocs reconstitués.

Dans un mode de réalisation le support est choisi parmi les bois légers peu lignifiés tels que par exemple le Peuplier, le Saule, le Tilleul, le Balsa ; les charbons de bois issus d'arbres non résineux ; les terres cuites ou tout support de même nature ; les argiles notamment de type smectites, illites, zéolithes, sépiolites ; les algues cavitaires notamment de type lithothamne ou diatomées et les dérivés de cellulose ou d'amidon notamment présentés en blocs reconstitués.

De préférence le support est choisi parmi les bois légers peu lignifiés tels que par exemple le Peuplier, le Saule, le Tilleul, le Balsa, les dérivés de cellulose ou d'amidon, les terres cuites ou tout support de même nature ; les roches volcaniques telles que par exemple la pouzzolane, la pierre ponce et l'andésite, et le liège.

De préférence le support est choisi parmi les bois légers peu lignifiés tels que par exemple le Peuplier, le Saule, le Tilleul, le Balsa les dérivés de cellulose ou d'amidon les terres cuites ou tout support de même nature.

Les huiles essentielles doivent générer une difficulté de repérage pour le parasite sans entraver l'activité normale de l'abeille et sans entraîner la présence de substances indésirables dans les produits de la ruche. Le choix des huiles essentielles peut avantageusement être dicté par la présence de molécules également identifiées dans les sécrétions glandulaires de l'abeille ou dans les propolis qu'elle récolte.

Dans un mode de réalisation, les huiles essentielles sont choisies parmi HE Abies alba, balsamea, sibirica - Allium cepa et sativa - Ammi visnaga - Amyris balsamifera - Aniba parviflora et roseodora - Artemisia cetonifera, annua, arborescens, herba alba - Betula alleghaniensis - Boldea fragans - Calamintha sylvatica et nepeta - Canaga odorata - Carum carvi - Cedrus atlantica et deodora - Cinnamomum camphora ssp japon - Cistus ladaniferus - Citrus aurantium, latifolia, limetta, limon, paradisii, reticulata, sinensis - Commiphora molmol - Coriandrum sativum - Cuminum cyminum - Cupressus arizonica et sempervirens - Cymbopogon citratus, flexuosus, martinii, nardus, winterianus - Daucus carota - Eucalyptus citriodora, dives, globulus, polybractea, radiata - Foeniculum vulgare - Gaultheria fragantissima et procumbens - Geranium macrorrhizum - Guajacum officinale - Helichrysum gymnocephalum et italicum - Hyssopus officinalis - Inula graveolens, helenium, viscosa - Juniperus communis, mexicana, sabina - Laurus nobilis - Lavandula angustifolia, burnatii, latifolia, stoechas, hybrida grosso - Lippia citriodora - Litsea citrata - Matricaria recutita - Melaleuca alternifolia, cajputii, linarifolia, quinquenervia - Melissa officinalis - Mentha arvensis, citrata, longifolia, piperita, pulegium, spicata, suaveolens - Monarda fistulosa - Myrica gale - Myristica fragans - Myroxylon balsanum, Myrtus communis - Nigella damascena - Ocimum basilicum, gratissimum - Pelargonium asperum, denticulanum, Petroselinum crispum, sativum - Picea mariana - Pimpinella anisum - Pinus laricio, mugo, pinaster, sylvestris - Ravensara anisata, aromatica - Rosa damascena - Rosmarinus officinalis camphoriferum, cineoliferum, verbenoniferum, pyramidalis - Salvia fructicosa, officinalis, sclarea - Satureja hortensis, montana - Styrax benzæ - - Teucrium flavum, marum - Thymus saturoïdes, serpyllum, vulgaris geranioliferum, linaloliferum, thuyanoliferum, thymoliferum - Trachyspermum ammi - Zingiber cassumanar, officinale, seules ou en mélange.

De préférence les huiles essentielles sont choisies parmi Aniba roseodora, Calamintha sylvatica, Canaga odorata, Cedrus atlantica, Citrus aurantium, Cymbopogon citratus, Eucalyptus citriodora, Gaultheria procumbens, Lavandula angustifolia, Monarda fistulosa, Pelargonium asperum, Salvia sclarea, Thymus geranioliferum, seules ou en mélange.

Dans un mode de réalisation l'huile essentielle ou le mélange d'huile essentielle est sous forme de solution alcoolique.

Dans un mode de réalisation, la composition comprend en outre un excipient (durcisseur) assurant une solidification de la (des) huile(s) essentielle(s) dans les cavités dudit support poreux.

L'addition aux solutions d'huiles essentielles d'excipients entraînant leur solidification dans les cavités du support poreux permet une diffusion des huiles essentielles sur des périodes beaucoup plus longues.

Dans un mode de réalisation, les excipients assurant une solidification des solutions d'huiles essentielles dans les cavités des supports microporeux sont choisis parmi les huiles végétales à effet siccatif telles que par exemple les huiles de carthame, lin, noix, oeillette, soja, tournesol ; les gommes végétales telles que par exemple la gomme arabique ou la gomme xanthane ; les latex végétaux tels que par exemple celui de l'hévéa ; les copolymères acryliques ; les excipients de synthèse dans la limite de leur neutralité vis-à-vis des huiles essentielles ou vis-à-vis du milieu intérieur de la ruche.

Dans un mode de réalisation de l'invention, la composition comprend en outre des molécules olfactives favorables aux abeilles.

On entend par molécule olfactive favorable aux abeilles des molécules qui vont avoir un impact positif sur le comportement des abeilles, c'est-à-dire des molécules qui vont attirer les abeilles, améliorer leur comportement, avoir un effet bénéfique sur leur santé et stimuler la colonie.

Dans un mode de réalisation ces molécules olfactives sont choisies parmi les molécules sécrétées par les abeilles telles que celles des glandes de Nassanov, et les molécules comprises dans les propolis qu'elles récoltent.
Dans un autre mode de réalisation les molécules olfactives sont choisies parmi les molécules odorantes contenues dans les huiles essentielles précédemment citées.

La composition selon l'invention est caractérisée en ce que les produits diffusés n'entraînent pas la présence de résidus indésirables dans les cires ou les produits de la ruche.

La composition selon l'invention est caractérisée en ce que les produits diffusés génèrent une difficulté de repérage pour les parasites (varroas) sans gêne pour les abeilles, surtout du fait des périodes très longues de diffusion.

La composition selon l'invention est caractérisée en ce que les produits diffusés sont libérés de façon régulière, continue, pendant des périodes longues en particulier pendant toutes les périodes hors présence des hausses. On entend par périodes hors présence des hausses les périodes pendant lesquelles aucune récolte de miel n'est pratiquée car la partie de la ruche destinée à recueillir le miel de récolte n'est pas mise à la disposition des abeilles.

Par « produits diffusés » on entend les huiles essentielles et toutes molécules olfactives issues de la composition.

Dans un mode de réalisation, la composition permet une diffusion des huiles essentielles et des molécules olfactives pendant une durée d'un an, de préférence entre 1 et 6 mois, de préférence entre 1 et 4 mois, plus préférentiellement entre 2 et 3 mois.

Dans un autre mode de réalisation, la composition permet une diffusion des huiles essentielles pendant une durée comprise entre 4 mois et 1 an, de préférence entre 6 mois et 1 an, plus préférentiellement entre 4 et 6 mois.

Les compositions selon l'invention sont notamment obtenues par imprégnation des supports avec une huile essentielle ou un mélange d'huiles essentielles. Pour réaliser cette imprégnation l'huile essentielle ou le mélange d'huiles essentielles est versé sur le support. L'huile essentielle ou le mélange d'huiles essentielles étant tel que défini précédemment. Dans un mode de réalisation, l'huile essentielle ou le mélange d'huiles essentielles comprend en outre un durcisseur tel que défini précédemment.

Dans un mode de réalisation le ratio en poids entre le mélange d'huiles essentielles et le support est compris entre 1:10 et 1:1, de préférence entre 1:9 et 1:2.
Dans un mode de réalisation 10 ml d'une huile végétale ou d'un mélange d'huiles essentielles comprenant un durcisseur sont versées sur un support de 20g.
Dans un mode de réalisation le ratio en poids le durcisseur et l'huile essentielle est compris entre 1 et 10, de préférence entre 1 et 8.

Ce procédé met en oeuvre un système de confusion olfactive, la composition de l'invention lorsqu'elle est placée dans la ruche va diffuser des odeurs très prégnantes qui vont masquer l'odeur des abeilles et créer pour varroa une forte difficulté à repérer les alvéoles où il doit pénétrer. Cette gêne olfactive aboutit dans un premier temps à une stagnation des effectifs de varroa, puis à une forte régression de ceux-ci.

Dans un mode de réalisation de ce procédé, la quantité d'huiles essentielles diffusées est comprise entre 50 et 500 mg/jour et par ruche, de préférence entre 100 et 400 mg, plus préférentiellement entre 100 et 300mg, de préférence entre 100 et 200 mg.
Dans un autre mode de réalisation de ce procédé, la quantité d'huiles essentielles diffusées est comprise entre 50 et 100 mg/jour et par ruche.

Dans un mode de réalisation de l'invention le traitement peut être effectué en continu, tout au long de l'année en remplaçant quand le besoin s'en fait ressentir les supports imprégnés. Dans un autre mode de réalisation de l'invention le traitement peut être effectué sur une plus courte durée, allant de un à plusieurs mois, notamment de 1 à 6 mois, en particulier de 1 à 2, 3, 4 ou 5 mois.

Dans un mode de réalisation, le procédé consiste en un traitement d'hiver, d'une durée pouvant être de 4 à 6 mois.
Dans un autre mode de réalisation, le procédé consiste en un traitement de printemps, d'une durée pouvant être de 6 à 8 semaines.
Dans un autre mode de réalisation, le procédé consiste en un traitement d'hiver, d'une durée pouvant être de 4 à 6 mois, suivi d'un traitement de printemps d'une durée pouvant être de 6 à 8 semaines.

L'invention décrit également l'utilisation de la composition de l'invention pour améliorer le comportement et l'activité des abeilles et/ou pour stimuler la colonie d'abeille.
En effet, les inventeurs ont pu montrer que les abeilles étaient plus actives et plus cohérentes en présence de la composition de l'invention. Ceci est dû au fait que les huiles essentielles peuvent renfermer des molécules identiques ou similaires avec celles des sécrétions glandulaires des abeilles.
Notamment l'invention décrit l'utilisation de la composition de l'invention pour attirer les abeilles dans une ruche et stimuler la colonie d'abeilles.
En effet, les huiles essentielles imprégnées sur le support, outre leur action sur varroa, attirent les abeilles.

L'invention décrit également l'utilisation de la composition de l'invention pour stimuler la colonie d'abeilles tout en luttant contre varroa.
L'invention va maintenant être décrite au moyen d'exemples de réalisation non limitatifs.
La figure 1 représente l'évolution de la masse du support imprégné en fonction temps pour un support de type cellulose reconstitué avec un mélange de Gaultheria Procumbens et Perlagonium asperum et de l'huile d'oeillette en tant que durcisseur.
La figure 2 représente l'évolution de la masse du support imprégné en fonction du temps pour un support de type terre cuite avec un mélange de Gaultheria Procumbens et Perlagonium asperum et de l'huile d'oeillette en tant que durcisseur.

### Exemple 1 : Mesure des quantités d'huiles essentielles diffusées en fonction du support et des excipients

Quatre supports imprégnés sont disposés dans une "ruche Dadan 10 cadres" occupée par des cadres de cire vierge et pesés chaque jour à des intervalles très précis de 24 heures. Les pesées sont maintenues tant qu'il y a variation de poids.
La température à l'intérieur de la ruche est enregistrée au quotidien et ses variations peuvent atteindre 10 à 15°C entre le jour et la nuit.

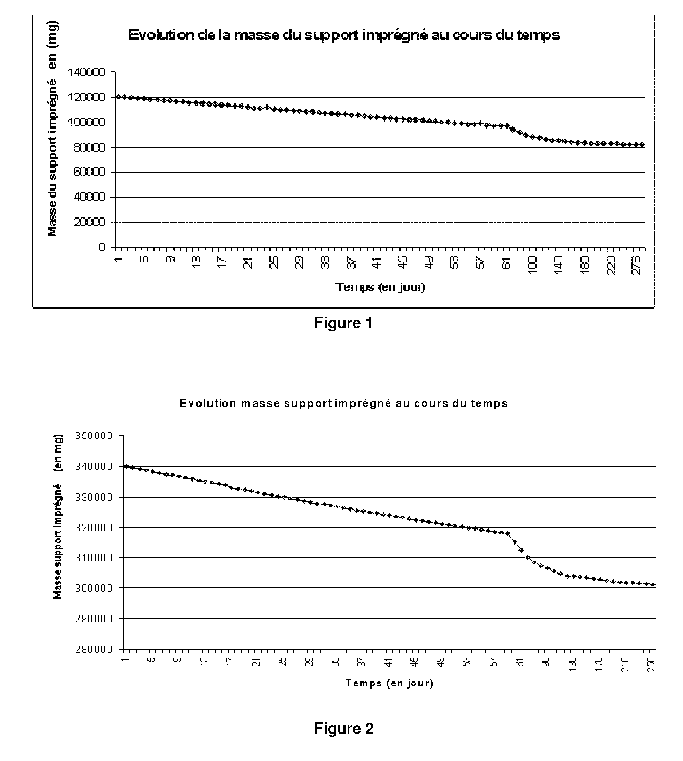

Les figures 1 et 2 représentent l'évolution de la masse du support imprégné au cours du temps et permettent donc d'avoir un aperçu de la quantité d'huile essentielle libérée au cours du temps.
La figure 1 correspond plus spécifiquement à un essai réalisé sur un support microporeux de type cellulose reconstitué imprégné par un mélange d'huiles essentielles comprenant Gaultheria Procumbens et Perlagonium asperum et un durcisseur de type huile d'oeillette. Le poids de chaque support non imprégné est de 20g (soit 80g pour les 4 supports placés dans la ruche) et 10g du mélange d'huiles essentielles et du durcisseur sont imprégnés par support. Le poids total supports + mélange d'huiles essentielles et de durcisseur dans la ruche est donc de 120g. La masse de durcisseur est 4 fois plus importante que la masse d'huile essentielle.
La figure 2 correspond plus spécifiquement à un essai réalisé sur un support de type terre cuite imprégné par un mélange d'huiles essentielles comprenant Gaultheria Procumbens et Perlagonium asperum et un durcisseur de type huile d'oeillette. Le poids de chaque support non imprégné est de 75g (soit 300g pour les 4 supports placés dans la ruche) et 10g du mélange d'huiles essentielles et du durcisseur sont imprégnés par support. Le poids total supports + mélange d'huiles essentielles et de durcisseur dans la ruche est donc de 340g. La masse de durcisseur est 4 fois plus importante que la masse d'huile essentielle.

Les résultats de l'ensemble des mesures effectuées sur des combinaisons variables entre un support microporeux, un excipient variable de solidification et un mélange toujours identique d'huiles essentielles permettent d'affirmer :
- que les couples constitués diffusent de manière constante, longue et indépendante de la température,
- que la quantité d'huiles essentielles diffusées varie entre 50 et 500mg/jour mais reste constante quelle que soit la température ambiante et est caractéristique de chaque combinaison support-excipient,
- que la diffusion reste constante pendant huit semaines, puis elle est deux fois moindre pendant les huit semaines suivantes,
- que la diffusion d'huiles essentielles par les supports microporeux reste très fortement perceptible par notre odorat, un an après l'imprégnation initiale et après un séjour de plusieurs mois dans la ruche.

### Exemple 2 : Résultats des essais pratiqués sur des colonies d'abeilles

### Matériel et méthode

Des colonies en phase de développement de printemps (10 lots traités) sont soumises à la diffusion d'un mélange d'huiles essentielles naturelles pendant 6 à 8 semaines. A la fin de la période d'exposition les supports de diffusion sont retirés et les ruches sont soumises à deux administrations flash d'acide formique afin de recueillir le maximum de varroas présents dans les colonies. Des colonies en phase de développement de printemps (10 lots) sont utilisés comme lots témoins et ne sont pas soumises à la diffusion du mélange d'huiles essentielles pendant les 6 à 8 semaines.

### Description du dispositif expérimental

Trois ruchers de type "conventionnel" et un rucher de type "alternatif" sont sélectionnés. On entend par rucher de type conventionnel un rucher traité avec des médicaments conventionnels, notamment du thymol de synthèse.
On entend par rucher alternatif un rucher traité par les compositions selon l'invention pendant toute l'année.
Dans chaque rucher conventionnel, vingt ruches estimées équivalentes (même âge des reines et même nombre de cadres de couvain initial) sont retenues : 10 ruches tirées au sort sont soumises à la diffusion des huiles essentielles et dix autres servent de ruches témoins. Dans chaque rucher alternatif, vingt ruches estimées équivalentes (même âge des reines et même nombre de cadres de couvain initial) sont retenues : 10 ruches tirées au sort sont soumises à la diffusion des huiles essentielles et dix autres servent de ruches témoins.
Les ruchers dits conventionnels (traités et témoins) sont soumis à la seule application longue de thymol de synthèse pendant l'automne et aucun traitement l'hiver.
Les ruchers dit alternatifs (traités et témoins) reçoivent des oligo-éléments dans le sirop de nourrissement d'automne et sont exposés pendant tout l'hiver aux supports microporeux imprégnés d'huiles essentielles selon l'invention.
Dans le cas des lots traités des supports microporeux imprégnés selon l'invention sont placés au nombre de quatre par ruche et laissés en place pendant six à huit semaines. Les lots témoins ne subissent pas ce traitement.
Après le retrait des supports imprégnés, 30 ml d'acide formique à 60% sont versés sur un support de cellulose tissé placé sur les têtes de cadre. L'administration d'acide formique est renouvelée 48 heures plus tard et après chaque intervention les varroas recueillis sur une feuille enduite de graisse à traire sont comptabilisés.

Les supports utilisés pour ces tests sont des supports microporeux de cellulose reconstituée pesant 40 grammes chacun et offrant une surface de diffusion d'environ 30 cm². Ces supports ont été chacun imprégnés avec 5 ml d'un mélange d'huile Gaultheria Procumbens et Perlagonium asperum et un durcisseur de type huile d'oeillette.

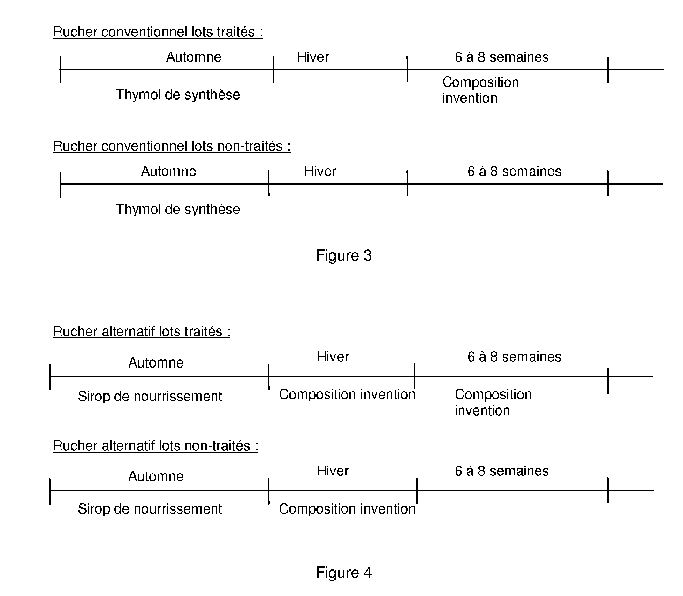

La figure 3 résume les traitements effectués sur les ruchers dits conventionnels.
La figure 4 résume les traitements effectués sur les ruchers dits alternatifs.

### Résultat des essais

| Ruchers conventionnels | | Acide formique I | Acide formique II |
|---|---|---|---|
| Lot traité | *Nombre de varroas*/*ruche* | 104 | 50 |
| Lot témoin | *Nombre de varroas*/*ruche* | 128 | 83 |

| Rucher en mode alternatif | | Acide formique I | Acide formique II |
|---|---|---|---|
| Lot traité | *Nombre de varroas*/*ruche* | 2 | 2 |
| Lot témoin | *Nombre de varroas*/*ruche* | 4 | 2 |

Dans les ruchers conduits sur un mode conventionnel, la réduction de la population des varroas est de 30% dans les ruches traitées. Ceci montre bien l'effet de la composition selon l'invention sur varroa. Ainsi, une administration, même courte de la composition selon l'invention permet une réduction du nombre de varroa dans la ruche.

Dans le rucher conduit sur un mode alternatif la population de varroas est pratiquement nulle sur les ruches traitées et les ruches témoins. Le fait que le nombre de varroa soit quasiment nul pour les ruchers témoins signifie que l'administration de la composition selon l'invention de manière prolongée permet de réduire fortement la proportion de varroa comparativement aux ruchers conventionnels témoins. Les lots traités montrent qu'une administration temporaire supplémentaire de la composition selon l'invention permet de réduire encore plus le nombre de varroa présent dans la ruche.
- La "confusion olfactive" sur la seule période de développement des colonies au printemps (administration pendant 6 à 8 semaines) permet une réelle diminution des effectifs de varroas.
- La même technique appliquée pendant une période très longue s'étendant de la phase de stimulation automnale à la phase de stimulation printanière aboutit à la quasi-disparition de la population des parasites.
- Les abeilles tolèrent très bien la présence des supports imprégnés voire même paraissent plus actives et plus cohérentes en leur présence. Cet apparent effet stimulant sur la colonie pourrait être imputé à la présence, dans le mélange, d'huiles essentielles renfermant des molécules communes avec les sécrétions glandulaires des abeilles ou les propolis récoltées.

## Revendications

1. Procédé de lutte contre varroa, par confusion olfactive utilisant au moins une composition comprenant un support poreux ou microporeux et une huile essentielle ou un mélange d'huiles essentielles imprégnant ledit support, **caractérisé en ce que** le procédé comprend les étapes de :
- mise en place de la composition dans la ruche,
- diffusion d'une quantité d'huiles essentielles de la composition comprise entre 50 et 500 mg/jour et par ruche pendant une durée comprise entre 4 mois et 1 an.

2. Procédé selon la revendication 1, **caractérisé en ce que** la quantité d'huiles essentielles diffusées est comprise entre 100 et 400 mg/jour et par ruche.

3. Procédé selon la revendication 1, **caractérisé en ce que** la quantité d'huiles essentielles diffusées est comprise entre 50 et 100 mg/jour et par ruche.

4. Procédé selon la revendication 1 à 3, **caractérisé en ce que** la durée de diffusion de la quantité d'huiles essentielles est comprise entre 6 mois et 1 an.

5. Procédé selon la revendication 1 à 3, **caractérisé en ce que** la durée de diffusion de la quantité d'huiles essentielles est comprise entre 4 et 6 mois.

6. Procédé selon l'une quelconque des revendications précédentes, **caractérisé en ce que** la composition comprend des huiles essentielles choisies parmi Aniba roseodora, Calamintha sylvatica, Canaga odorata, Cedrus atlantica, Citrus aurantium, Cymbopogon citratus, Eucalyptus citriodora, Gaultheria procumbens, Lavandula angustifolia, Monarda fistulosa, Pelargonium asperum, Salvia sclarea, Thymus geranioliferum, seules ou en mélange.

7. Procédé selon l'une quelconque des revendications précédentes, **caractérisé en ce que** le support est choisi parmi les bois légers peu lignifiés choisis parmi le Peuplier, le Saule, le Tilleul, le Balsa, les charbons de bois issus d'arbres non résineux, les terres cuites, les argiles choisies parmi les smectites, les illites, les zéolithes, les sépiolites, les algues cavitaires choisies parmi le lithothamne ou les diatomées et les blocs reconstitués de dérivés de cellulose ou d'amidon.

8. Procédé selon l'une quelconque des revendications précédentes, **caractérisé en ce que** la composition comprend en outre un excipient assurant une solidification de la (des) huile(s) essentielle(s) dans les cavités dudit support choisi parmi les huiles végétales à effet siccatif choisies parmi les huiles de carthame, lin, noix, oeillette, soja, tournesol, les gommes végétales choisies parmi la gomme arabique ou la gomme xanthane, les latex végétaux de l'hévéa.

9. Procédé selon l'une quelconque des revendications précédentes, **caractérisé en ce que** la composition comprend en outre des molécules olfactives favorables aux abeilles choisies parmi les molécules sécrétées par les abeilles telles que celles des glandes de Nassanov, et les molécules comprises dans les propolis qu'elles récoltent.

## Patentansprüche

1. Verfahren zum Bekämpfen der Varroamilbe durch olfaktorische Verwirrung unter Verwendung mindestens einer Zusammensetzung, die einen porösen oder mikroporösen Träger und ein ätherisches Öl oder eine Mischung von ätherischen Ölen aufweist, das/die den Träger durchdringt, **dadurch gekennzeichnet, dass** das Verfahren die folgenden Schritte aufweist:
- Bereitstellen der Zusammensetzung im Bienenstock,
- Verteilen einer zwischen 50 und 500 mg/Tag und pro Bienenstock betragenden Menge von ätherischen Ölen der Zusammensetzung während einer Dauer, die zwischen vier Monate und ein Jahr beträgt.

2. Verfahren gemäß Anspruch 1, **dadurch gekennzeichnet, dass** die Menge an verteilten ätherischen Ölen zwischen 100 und 400 mg/Tag und pro Bienenstock beträgt.

3. Verfahren gemäß Anspruch 1, **dadurch gekennzeichnet, dass** die Menge an verteilten ätherischen Ölen zwischen 50 und 100 mg/Tag und pro Bienenstock beträgt.

4. Verfahren gemäß Anspruch 1 bis 3, **dadurch gekennzeichnet, dass** die Dauer des Verteilens der Menge an ätherischen Ölen zwischen sechs Monate und ein Jahr beträgt.

5. Verfahren gemäß Anspruch 1 bis 3, **dadurch gekennzeichnet, dass** die Dauer des Verteilens der Menge an ätherischen Ölen zwischen vier Monate und sechs Monate beträgt.

6. Verfahren gemäß irgendeinem der vorhergehenden Ansprüche, **dadurch gekennzeichnet, dass** die Zusammensetzung ätherische Öle aufweist, allein oder gemischt, die aus Aniba roseodora, Calamintha sylvatica, Canaga odorata, Cedrus atlantica, Citrus aurantium, Cymbopogon citratus, Eucalyptus citriodora, Gaultheria procumbens, Lavandula angustifolia, Monarda fistulosa, Pelargonium asperum, Salvia sclarea, Thymus geranioliferum ausgewählt werden.

7. Verfahren gemäß irgendeinem der vorhergehenden Ansprüche, **dadurch gekennzeichnet, dass** der Träger aus leichten, wenig verholzten Hölzern, die aus Pappel, Weide, Linde, Balsaholz ausgewählt werden, Holzkohle, die aus nicht harzenden Hölzern stammt, Terrakotta, Tonen, die aus Smektiten, Illiten, Zeolithen, Sepioliten ausgewählt werden, kavitären Algen, die aus Lithothamnium oder aus Diatomeen ausgewählt werden, und wiederhergestellten Blöcken von Zellulose- oder Stärkederivaten ausgewählt wird.

8. Verfahren gemäß irgendeinem der vorhergehenden Ansprüche, **dadurch gekennzeichnet, dass** die Zusammensetzung ferner ein Vehikel aufweist, das eine Verfestigung des ätherischen Öls / der ätherischen Öle in den Hohlräumen des Trägers sicherstellt, das aus Pflanzenölen mit austrocknender Winkung, die aus Färberdistelöl, Leinöl, Nussöl, Schlafmohnöl, Sojaöl, Sonnenblumenöl ausgewählt werden, pflanzlichem Gummi, das aus Gummiarabikum oder Xanthangummi ausgewählt wird, pflanzlichem Latex vom Kautschukbaum ausgewählt wird.

9. Verfahren gemäß irgendeinem der vorhergehenden Ansprüche, **dadurch gekennzeichnet, dass** die Zusammensetzung ferner Geruchsmoleküle aufweist, die für Bienen günstig sind, die aus von Bienen sezernierten Molekülen, zum Beispiel denjenigen aus den Nasanov-Drüsen, sowie den Molekülen ausgewählt werden, die in den von ihnen geernteten Bienenharzen enthalten sind.

## Claims

1. Method of controlling varroa by olfactory confusion using at least one composition comprising a porous or microporous support and an essential oil or a mixture of essential oils impregnating said support, **characterised in that** the method comprises the steps of:
- placing the composition in the hive,
- diffusing a quantity of essential oils of the composition of from 50 to 500 mg/day and per hive for a period of from 4 months to 1 year.

2. Method according to claim 1, **characterised in that** the quantity of essential oils diffused is from 100 to 400 mg/day and per hive.

3. Method according to claim 1, **characterised in that** the quantity of essential oils diffused is from 50 to 100 mg/day and per hive.

4. Method according to claim 1 to 3, **characterised in that** the period for which the quantity of essential oils is diffused is from 6 months to 1 year.

5. Method according to claim 1 to 3, **characterised in that** the period for which the quantity of essential oils is diffused is from 4 to 6 months.

6. Method according to any one of the preceding claims, **characterised in that** the composition comprises essential oils selected from Aniba roseodora, Calamintha sylvatica, Canaga odorata, Cedrus atlantica, Citrus aurantium, Cymbopogon citratus, Eucalyptus citriodora, Gaultheria procumbens, Lavandula angustifolia, Monarda fistulosa, Pelargonium asperum, Salvia sclarea, Thymus geranioliferum, alone or in a mixture.

7. Method according to any one of the preceding claims, **characterised in that** the support is selected from lightweight, not highly lignified woods selected from poplar, willow, lime, balsa, charcoals obtained from non-resinous trees, terracottas, clays selected from the smectites, illites, zeolites, sepiolites, cavitary algae selected from lithothamnium and diatoms, and reconstituted blocks of cellulose or starch derivatives.

8. Method according to any one of the preceding claims, **characterised in that** the composition further comprises an excipient ensuring solidification of the essential oil(s) in the cavities of said support, selected from vegetable oils having a siccative effect selected from safflower oil, linseed oil, walnut oil, poppyseed oil, soybean oil, sunflower oil, vegetable gums selected from gum arabic or xanthan gum, vegetable latexes from the rubber tree.

9. Method according to any one of the preceding claims, **characterised in that** the composition further comprises olfactory molecules which are favourable to bees, selected from molecules secreted by bees such as those from the Nassanov glands, and the molecules contained in the propolis that they collect.
